# EUROPEAN PATENT SPECIFICATION

(11) **EP 2 732 878 B1**
(45) Date of publication and mention of the grant of the patent: **12.09.2018**
(21) Application number: 12193347.7
(22) Date of filing: 20.11.2012
(51) Int. Cl.: B01L 9/06, G01N 35/00

(54) **Magnetic rack system and method for using a magnetic rack system**
Magnetisches Regalsystem und Verfahren zur Verwendung eines magnetischen Regalsystems
Système de grille magnétique et procédé d'utilisation d'un système de grille magnétique

(43) Date of publication of application: 21.05.2014
(73) Proprietor: QIAGEN GmbH, 40724 Hilden (DE)
(72) Inventor: Focke, Maximilian, Dr., 40724 Hilden (DE); Breitkopf, Lothar, 40724 Hilden (DE); Kowalewski, Karen, 40724 Hilden (DE); Singer, Thorsten, Dr., 40724 Hilden (DE)
(74) Representative: König, Gregor Sebastian

(56) References cited:
- WO-A1-92/05443
- WO-A1-2011/047233
- DE-A1- 3 102 029
- US-A- 5 098 663
- US-A- 5 950 832

## Description

The invention pertains to the field of magnetic rack systems, especially used for separating magnetic particles, for example magnetic beads, from a non-magnetic medium, especially a liquid in the field of chemical and/or biological substances, more especially in the field of a sample in biotechnology, for example blood. Especially, the magnetic rack system can be used with regard to molecular biological protocols and/or medical diagnostic field.

WO 2008/145711 A2 discloses a magnetic separating device for isolating magnetically labelled particles from a non-magnetic medium, wherein a body portion having a magnetising portion for providing a magnetic field and a sample vessel retaining portion for retaining at least one sample vessel are provided.

Although the device and method disclosed in WO 2008/145711 A2 obtain good results, the configuration cannot easily be used with standard laboratory equipment.

Thus, if a magnetic bead protocol requires a heating step, every reaction tube has to be separately moved to a heating block or water bath and moved back for magnetic separation. Further, if a magnetic bead protocol requires bead mixing, either every reaction tube has to be separately moved to a shaker/vortexer or the complete rack has to be held by hand put on a shaker/vortexer. This makes longer mixing times very inconvenient and not really practicable.

US 5,098,663 A discloses a specimen rack for specimen containers. The rack system comprises: a holder for receiving a plurality of specimen containers, and a stand for holding a plurality of such holders parallel to one another. The holder comprises recesses for the containers. The recesses are arranged along a line in the holder. The stand is in the shape of a U. The stand can be adapted to contain magnets and can be used to attract magnetic particles which are present in the containers.

WO 92/05443 A1 discloses an apparatus for separating a target reagent attached to a solid phase magnetic support from a mixture of reagents comprising a support means for supporting an array of reaction vessels, and an associated array of permanent magnets arranged such that, when an array of reaction vessels is supported in the support means and the apparatus is in use for separating a target reagent from a mixture of reagents in one or more of the reaction vessels, each magnet is positioned so as to be able to exert a magnetic force on an associated reaction vessel or vessels in the array of reaction vessels which magnetic force serves to hold the magnetic support and attached target reagent in a fixed position relative to the magnet.

The limitations of the already existing magnetic racks result in inconvenient protocols with a large number of handling steps. Every reaction tube has to be handled individually, for example to put it into a shaker, water bath and back to the magnetic bead separator. As a consequence the disadvantages in handling described above leads to the result that manual protocols based on magnetic beads are very inconvenient and have gained little or no acceptance in the market over years.

The object of the present invention is to provide a suitable device and method for handling tubes with magnetic beads, especially in the field of biology, which is convenient and overcomes at least one of the above-mentioned problems.

This object is solved by the subject-matter of the independent claims.

The present invention is based on the finding that a combination of a magnetic rack system comprising a holder for holding at least two, preferably 12 tubes, a base having a plurality of receptacles and at least one magnet, and an adapter provide for a convenient manual and semi-automatic processing of magnetic beads.

The holder and the base allow simultaneous handling of a plurality of tubes. The holder can be adapted to be used with standard laboratory equipment, for example shakers and/or vortex devices with or without the adapter. The distance between through-holes in the holder for receiving tubes is preferably such that it fits on standard top parts of commonly used laboratory equipment (shakers) and the distances between the tubes is preferably appropriate for multi-pipettes. According to the invention, the term "tube" encompasses any reservoir, vessel or microenvironment suitable for containing a chemical and/or biological fluid. Preferably, the tube can contain several ml of fluid. The tube is adapted, to contain not more than 50ml, more preferably not more than 15 ml of fluid, especially preferably not more than 2 ml of fluid.

According to the invention, the term "adapter" encompasses any means which allow for a mechanical connection between a laboratory device, for example a shaker, vortexer or thermomixer, and the holder. The connection provided by the adapter can be formed directly between the holder and the laboratory equipment but as well indirectly via the tubes held by the holder such that the adapter provides for a form closure between the tubes and the adapter, wherein the adapter is mounted on the laboratory equipment.

According to the invention, the term "laboratory equipment" encompasses any device which allows for heating, cooling, shaking, stirring and/or mixing of the liquid contained in the tubes. Thus, the term "laboratory equipment" comprises a shaker, a vortexer, a thermocycler, a thermomixer and a water bath for heating and/or cooling of the tubes.

Preferably, the holder can comprise or be made of a foamed polymer (for example SBS (styrene-butadiene-styrene)). This allows for a holder with low weight and which is compressible which in turn allows for a flexible geometry (including tolerances) in manufacturing the holder. Further, the holder can be used as a tube floater in a water bath.

Preferably, the adapter can comprise or be made of a foamed polymer (for example SBS (styrene-butadiene-styrene)). This allows for an adapter with low weight and which is compressible which in turn allows for a flexible geometry (including tolerances in manufacturing the adapter.

Preferably, the base can comprise or be made of a polymer, especially for example POM (polyoxymethylene) which allows manufacturing of a very solid and robust base to ensure stability when the holder is put on and removed during molecular biological protocols. In an alternative embodiment, the base can comprise or be made of aluminium.

The adapter is formed as a plate comprising receptacles for receiving the tubes held by the holder. The receptacles are formed to hold tubes in form closure. The adapter in turn can be mounted on the laboratory equipment such that a form closure and/or force closure is used.

For higher sample throughput two or more holders can be processed simultaneously in a laboratory device, for example a shaker. When processing two or more holders on one laboratory device at least one of the tubes of one line is exposed. Thus, only tube(s) of one line in the holder are inserted in the receptacles of the laboratory equipment.

Other objects, features, advantages and aspects of the present application will become apparent to those skilled in the art from the following description and appended claims. It should be understood, however, that the following description, and specific examples, while indicating preferred embodiments of the application, are given by way of illustration only. Various changes and modifications within the spirit and scope of the claims will become readily apparent to those skilled in the art reading the following.

Examples of the invention will now be described with reference to the accompanying drawings in which:
Figure 1 shows a holder of the magnetic rack system according to the invention, in which tubes are inserted;
Figure 2a shows a base of the magnetic rack system according to the invention;
   Figure 2b shows the holder with the tubes according to Figure 1 put on the base according to Figure 2a;
Figure 3a shows an adapter of the magnetic rack system according to the invention; and
Figure 3b shows the holder with the tubes according Figure 1 put on the adapter according to Figure 3a.

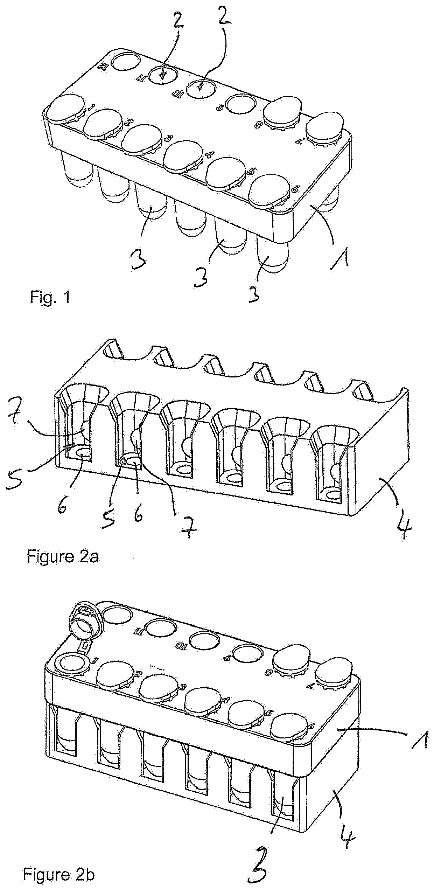

Figure 1 shows a holder 1 of the magnetic rack system according to the invention. The holder 1 is formed as a plate with through-holes 2 for receiving tubes 3. The tubes 3 have a pre-determined alignment with regard to the through-holes in the holder 1. The through-holes 2 are arranged in two lines and six columns. Adjacent through-holes 2 in one line have a distance equal to 0,9 to 3,6 cm, the lines have a distance equal to 0,9 to 3,6 cm.
Figure 2a and Figure 2b show a base 4 of the magnetic rack system according to the invention. Receptacles 5 are provided for receiving the tubes 3 held by the holder 1. The distance of the receptacles 5 in the base 4 corresponds to the distances of the through-holes 2 in the holder 1. A deepening 6 is formed in each of the receptacles 5 for surrounding an end of the tubes 3. In each of the receptacles 5 a magnet or magnet portion 7 is exposed. The magnet 7 can interact with magnetic particles, especially magnetic beads, contained in the tubes 3 when the tubes 3 are put in the receptacles 5. The holder 1 can comprise an apron extending downwardly which surrounds the outer circumference of the base 4 as a measure to hold the holder 1 in place and alignment.

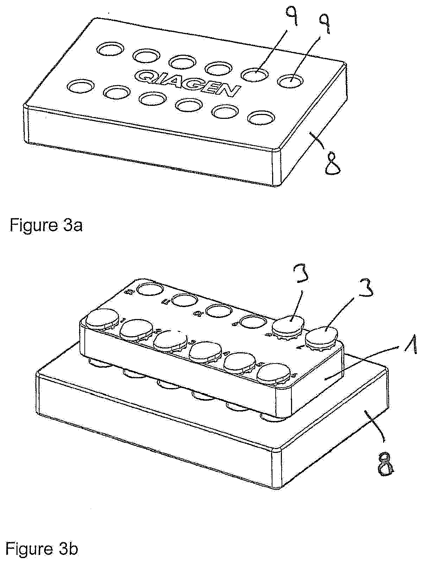

Figure 3a and Figure 3b show an adapter 8 containing receptacles 9 for receiving the tubes 3 held by the holder 1. The receptacles 9 are arranged in distances which correspond to the distances used for the distances of the through-holes 2 in the holder 1.

## Claims

1. Magnetic rack system comprising
a. a holder (1) having through-holes (2) for receiving tubes (3) and
b. a base (4) having a plurality of receptacles (5) with at least one magnet (7), wherein the through-holes of the holder (1) are arranged relative to the base (4) such that each end of a tube (3) can be positioned in a respective receptacle (5) in a pre-determined position relative to the magnet (7), and
c. an adapter (8), wherein the adapter (8) is designed to allow transmission of motion to the tubes (2) positioned in the holder (1), wherein the adapter (8) is formed as a plate comprising receptacles (9) for receiving the tubes (3) held by the holder (1), the receptacles (9) are formed to hold the tubes (3) in form closure and are positioned below the holder (1), wherein the adapter (8) is adapted to be mounted on a laboratory equipment.

2. Magnetic rack system according to claim 1, **wherein** the through-holes (2) in the holder are arranged in lines and columns, the lines having a spacing of 0,9 to 3,6 cm, and the columns having a spacing of 0,9 to 3,6 cm, wherein the positions of the receptacles (5) in the base (4) are arranged corresponding to the position of the through-holes (2) in the holder (1).

3. Magnetic rack system according to claim 1 or 2, **wherein** the holder (1) comprises a foamed polymer.

4. Magnetic rack system according to any one of claims 1 to 3, **wherein** the adapter (8) comprises a foamed polymer.

5. Magnetic rack system according to any one of claims 1 to 4, **wherein** the base (4) comprises a solid polymer and/or aluminium housing.

6. Magnetic rack system according to any one of claims 1 to 5, **wherein** the adapter (8) is in its geometry adapted for a transmission of motion to the tubes (3) positioned in the holder (1).

7. Method for handling tubes (3) positioned in a holder (1) of the magnetic rack system according to any one of claims 1 to 6, wherein the method comprises the steps of inserting tubes (3) into receptacles of an adapter of the magnetic rack system according to any one of claims 1 to 6 mounted on a laboratory device, especially a shaker.

## Patentansprüche

1. Magnetisches Gestellsystem, das umfasst
a. einen Halter (1) mit Durchgangslöchern (2) zum Aufnehmen von Röhrchen (3) und
b. einen Sockel (4) mit einer Vielzahl von Fassungen (5) mit mindestens einem Magneten (7), wobei die Durchgangslöcher des Halters (1) bezogen auf den Sockel (4) so angeordnet werden, dass jedes Ende eines Röhrchens (3) in einer entsprechenden Fassung (5) in einer vorbestimmten Position bezogen auf den Magneten (7) positioniert werden kann, und
c. einen Adapter (8), wobei der Adapter (8) ausgelegt wird, Bewegungsübertragung auf die in dem Halter (1) positionierten Röhrchen (3) zu ermöglichen, wobei der Adapter (8) als eine Platte ausgebildet wird, die Fassungen (9) zum Aufnehmen der durch den Halter (1) gehaltenen Röhrchen (3) umfasst, wobei die Fassungen (9) ausgebildet werden, um die Röhrchen (3) in Formschluss zu halten und unterhalb des Halters (1) positioniert werden, wobei der Adapter (8) angepasst wird, auf einer Laboreinrichtung befestigt zu werden.

2. Magnetisches Gestellsystem nach Anspruch 1, **wobei** die Durchgangslöcher (2) in dem Halter in Zeilen und Spalten angeordnet werden, wobei die Zeilen einen Abstand von 0,9 bis 3,6 cm aufweisen und die Spalten einen Abstand von 0,9 bis 3,6 cm aufweisen, wobei die Positionen der Fassungen (5) in dem Sockel (4) entsprechend der Position der Durchgangslöcher (2) in dem Halter (1) angeordnet werden.

3. Magnetisches Gestellsystem nach Anspruch 1 oder 2, **wobei** der Halter (1) ein geschäumtes Polymer umfasst.

4. Magnetisches Gestellsystem nach einem der Ansprüche 1 bis 3, **wobei** der Adapter (8) ein geschäumtes Polymer umfasst.

5. Magnetisches Gestellsystem nach einem der Ansprüche 1 bis 4, **wobei** der Sockel (4) ein massives Polymer- und/oder Aluminiumgehäuse umfasst.

6. Magnetisches Gestellsystem nach einem der Ansprüche 1 bis 5, **wobei** der Adapter (8) in seiner Geometrie für eine Bewegungsübertragung auf die in dem Halter (1) positionierten Röhrchen (3) geeignet ist.

7. Verfahren zum Handhaben von in einem Halter (1) des magnetischen Gestellsystems nach einem der Ansprüche 1 bis 6 positionierten Röhrchen (3), wobei das Verfahren die Schritte des Einsetzens von Röhrchen (3) in Fassungen eines auf einem Laborgerät, insbesondere einem Rüttler, befestigten Adapters des magnetischen Gestellsystems nach einem der Ansprüche 1 bis 6 umfasst.

## Revendications

1. Système de grille magnétique comprenant :
a. un support (1) qui comporte des trous traversants (2) pour recevoir des tubes (3) ; et
b. une base (4) qui comporte une pluralité de réceptacles (5) avec au moins un aimant (7), dans lequel les trous traversants du support (1) sont agencés par rapport à la base (4) de telle sorte que chaque extrémité d'un tube (3) puisse être positionnée dans un réceptacle respectif (5) en une position prédéterminée par rapport à l'aimant (7) ; et
c. un adaptateur (8), dans lequel l'adaptateur (8) est conçu de sorte qu'il permette une transmission du mouvement aux tubes (3) qui sont positionnés dans le support (1), dans lequel l'adaptateur (8) est formé en tant que plaque qui comprend des réceptacles (9) pour recevoir les tubes (3) qui sont supportés par le support (1), les réceptacles (9) sont formés de manière à ce qu'ils supportent les tubes (3) selon un effet de contenance par conformité de formes et ils sont positionnés au-dessous du support (1), dans lequel l'adaptateur (8) est adapté de manière à ce qu'il soit monté sur un équipement de laboratoire.

2. Système de grille magnétique selon la revendication 1, dans lequel les trous traversants (2) dans le support sont agencés selon des lignes et des colonnes, les lignes présentant un espacement de 0,9 à 3,6 cm, et les colonnes présentant un espacement de 0,9 à 3,6 cm, dans lequel les positions des réceptacles (5) dans la base (4) sont agencées de manière à ce qu'elles correspondent aux positions des trous traversants (2) dans le support (1).

3. Système de grille magnétique selon la revendication 1 ou 2, dans lequel le support (1) comprend un polymère expansé.

4. Système de grille magnétique selon l'une quelconque des revendications 1 à 3, dans lequel l'adaptateur (8) comprend un polymère expansé.

5. Système de grille magnétique selon l'une quelconque des revendications 1 à 4, dans lequel la base (4) comprend un boîtier en polymère solide et/ou en aluminium.

6. Système de grille magnétique selon l'une quelconque des revendications 1 à 5, dans lequel l'adaptateur (8) présente une géométrie qui est adaptée pour une transmission du mouvement aux tubes (3) qui sont positionnés dans le support (1).

7. Procédé pour manipuler des tubes (3) qui sont positionnés dans un support (1) du système de grille magnétique selon l'une quelconque des revendications 1 à 6, dans lequel le procédé comprend les étapes consistant à insérer des tubes (3) à l'intérieur de réceptacles d'un adaptateur du système de grille magnétique selon l'une quelconque des revendications 1 à 6 qui est monté sur un dispositif de laboratoire, tout particulièrement un agitateur secoueur.
